(19) Europäisches Patentamt / European Patent Office / Office européen des brevets

(11) **EP 3 184 328 A1**

(12) **EUROPEAN PATENT APPLICATION**

(43) Date of publication:
28.06.2017 Bulletin 2017/26

(51) Int Cl.:
*B60C 7/12* (2006.01)   *B60C 7/18* (2006.01)

(21) Application number: 16203407.8

(22) Date of filing: 12.12.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 21.12.2015 US 201562270285 P

(71) Applicant: The Goodyear Tire & Rubber Company
Akron, Ohio 44316 (US)

(72) Inventors:
• VAN RIPER, Philip Carl
Cuyahoga Falls, OH 44223 (US)
• LETTIERI, Joseph Carmine
Hudson, OH 44236 (US)
• BANDY, Rebecca Anne
Cuyahoga Falls, OH 44224 (US)
• SIEGEL, Addison Brian
Cuyahoga Falls, OH 44221 (US)
• MOGHANI, Mahdy Malekzadeh
Cuyahoga Falls, OH 44221 (US)
• MENDENHALL, Andrew B.
Mooresville, IN 46158 (US)

(74) Representative: Kutsch, Bernd
Goodyear S.A.
Patent Department
Avenue Gordon Smith
7750 Colmar-Berg (LU)

(54) **NON-PNEUMATIC TIRE WITH A SPOKE DISK COMPRISING SPOKES WITH PARABOLIC CURVATURE**

(57)   A non-pneumatic tire (100) is disclosed comprising a ground contacting annular tread portion (200), a shear band (300) and at least one spoke disk (3000) connected to the shear band (300). The spoke disk (3000) has one or more first spokes (3030) having a first parabolic curvature. The one or more first spokes (3030) extend from an outer ring (3020) to an inner ring (3010) of the spoke disk (3000).

Fig. 17

## Description

Field of the Invention

The present invention relates generally to vehicle tires and more particularly to a non-pneumatic tire.

Background of the Invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non-pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus an improved non-pneumatic tire is desired that has all the features of the pneumatic tires without the drawback of the need for air inflation is desired.

Summary of the Invention

The invention relates to a tire in accordance with claim 1.

Dependent claims refer to preferred embodiments of the invention.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, wherein the one or more first spokes extends from an outer ring to an inner ring.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, and wherein the one or more first spokes extends from an outer ring to an inner ring having one or more spokes a second parabolic curvature.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, wherein the one or more first spokes extends from an outer ring to an inner ring, and wherein there are a plurality of first spokes that overlap with each other.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, wherein the one or more first spokes extends from an outer ring to an inner ring, and wherein an apex of the first spokes is located on the inner ring.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, wherein the one or more first spokes extends from an outer ring to an inner ring, and wherein the one or more first spokes extend from the outer ring to the inner ring.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, wherein the one or more first spokes extends from an outer ring to an inner ring, and wherein the one or more first spokes extend from the outer ring to the inner ring, and then from the inner ring to the outer ring.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, wherein the one or more first spokes extends from an outer ring to an inner ring, wherein a first spoke intersects with an adjacent first spoke at a junction, wherein each first spoke has a L2 portion radially outwards of the junction, and a L1 portion located radially inward of the junction, and wherein the ratio of L2/L1 ranges from 0.2 to 5.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, wherein the one or more first spokes extends from an outer ring to an inner ring, and wherein said first spoke has a thickness t3 in the range of 2 to 5 mm.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, wherein the one or more first spokes extends from an outer ring to an inner ring, and wherein said first spoke has an axial thickness w3 in the range of 25 to 70 mm.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, wherein the one or more first spokes extends from an outer ring to an inner ring, and wherein said first spoke has a ratio of spoke axial width w3 to spoke thickness t3 in the range of 8 to 28.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, wherein the one or more first spokes extends from an outer ring to an inner ring, and wherein the spoke disk further includes a second spoke having a second curvature different than the first curvature.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, wherein the one or more first spokes extends from an outer ring to an inner ring, wherein the spoke disk further includes a second spoke having a second curvature different than the first curvature, and wherein the second curvature is a parabolic cure having an apex intersecting the outer ring.

One or more embodiments of the present invention provide a non-pneumatic tire comprising a ground contacting annular tread portion, a shear band, and at least one spoke disk connected to the shear band, wherein the spoke disk has one or more first spokes having a parabolic curvature, wherein the one or more first spokes extends from an outer ring to an inner ring, wherein the spoke disk further includes a second spoke having a second curvature different than the first curvature, and wherein the second spoke intersects with two of the first spokes.

Brief Description of the Drawings

The present invention will be better understood through reference to the following description and the appended drawings, in which:

FIG. 1A is a perspective view of a first embodiment of a non-pneumatic tire of the present invention;
FIG. 1B is a perspective view of a second embodiment of a non-pneumatic tire of the present invention;
FIG. 1C is a perspective view of a third embodiment of a non-pneumatic tire of the present invention;
FIG. 2 is a perspective front view of a first embodiment of a spoke disk;
FIG. 3 is a schematic cross section view of the first embodiment of the spoke disk of Figure 2;
FIG. 4 is a front view of the first embodiment of the spoke disk of Figure 2;
FIG. 5 is a cross-sectional view of the non-pneumatic tire of Figure 1;
FIG. 6 is a second embodiment of a spoke disk of the present invention;
FIG. 7 is a third embodiment of a spoke disk of the present invention;
FIG. 8 is a cross-sectional view of an alternate embodiment of a non-pneumatic tire of the present invention illustrating multiple spoke disks with the same orientation;
FIG. 9 is a cross-sectional view of the non-pneumatic tire of Fig. 1, shown with two spoke disks in opposed orientation so that the spokes bow axially inward when under load;
FIG. 10 is a cross-sectional view of the non-pneumatic tire of Fig. 1 shown with two disk spokes having a different orientation so that the spokes bow axially outward when under load;
FIG. 11 is a cross-sectional view of the non-pneumatic tire of Fig. 1 shown with the disk spokes having a curved cross-section, shown under load;
FIG. 12 is a front view of a fourth embodiment of a spoke disk of the present invention;
FIG. 13 is a perspective view of the fourth embodiment of the spoke disk of FIG. 12;
FIG. 14 is a front view of a fifth embodiment of a spoke disk of the present invention;
FIG. 15 is a perspective view of the fifth embodiment of the spoke disk of FIG. 14 shown under loading;
FIG. 16 is a close-up view of the first and second spoke members of the fourth, fifth embodiments of Figures 12, 14;
FIG. 17 is a front view of a sixth embodiment of a spoke disk;
FIG. 18 is a perspective view of the sixth embodiment of a spoke disk;
FIG. 19 is a front view of a seventh embodiment of a spoke disk;

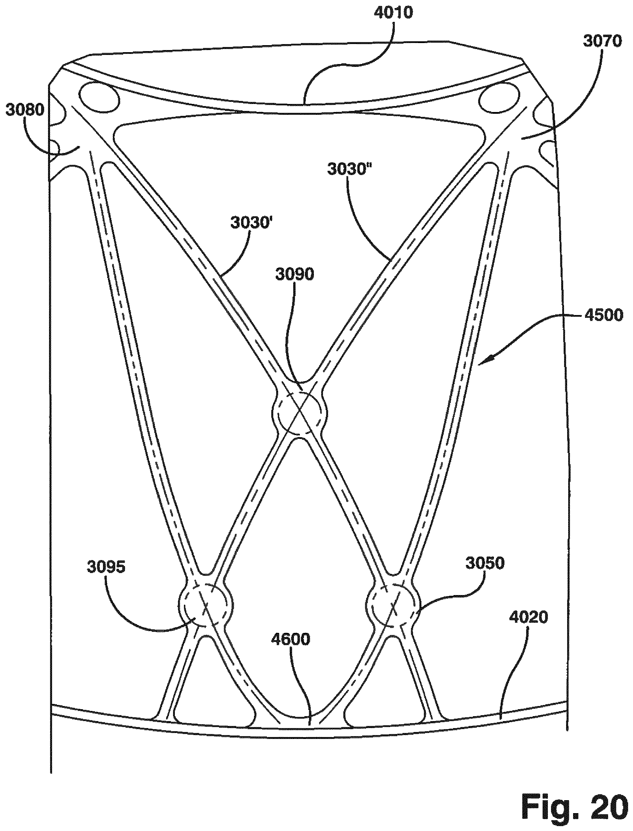

FIG. 20 is a close up view of the spoke disk of FIG. 19;

FIG. 21 is a perspective view of the sixth embodiment of a spoke disk shown with no load;
FIG. 22 is a perspective view of the sixth embodiment of the spoke disk shown with load;
FIG. 23a illustrates a spring rate test for a shear band, while FIG. 23b illustrates the spring rate k determined from the slope of the force displacement curve;
FIG. 24a illustrates a spring rate test for a spoke disk, while FIG. 24b illustrates the spring rate k determined from the slope of the force displacement curve;
FIG. 25a illustrates a spring rate test for a spoke disk, while FIG. 25b illustrates the tire spring rate k determined from the slope of the force displacement curve;

Definitions

The following terms are defined as follows for this description.

"Equatorial Plane" means a plane perpendicular to the axis of rotation of the tire passing through the centerline of the tire.

"Meridian Plane" means a plane parallel to the axis of rotation of the tire and extending radially outward from said axis.

"Hysteresis" means the dynamic loss tangent measured at 10 percent dynamic shear strain and at 25°C.

Detailed Description of Example Embodiments of the Invention

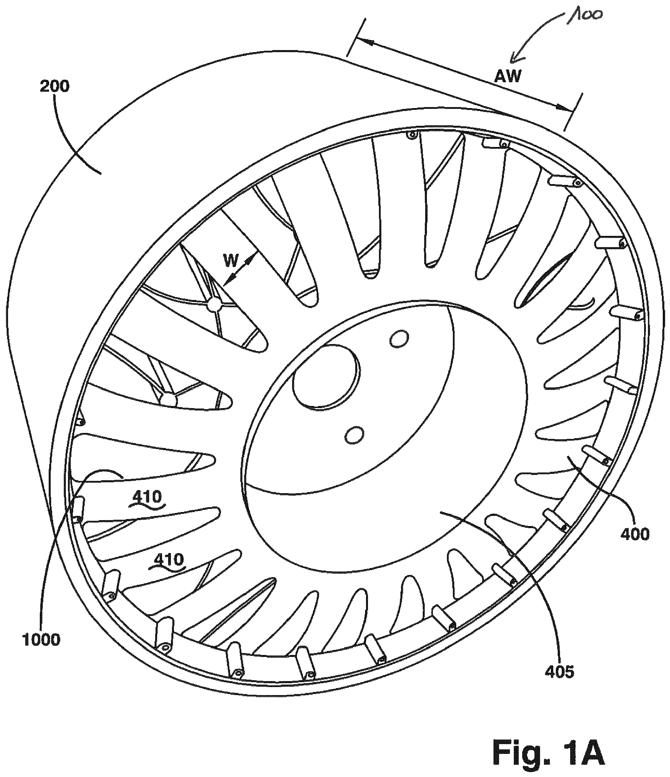

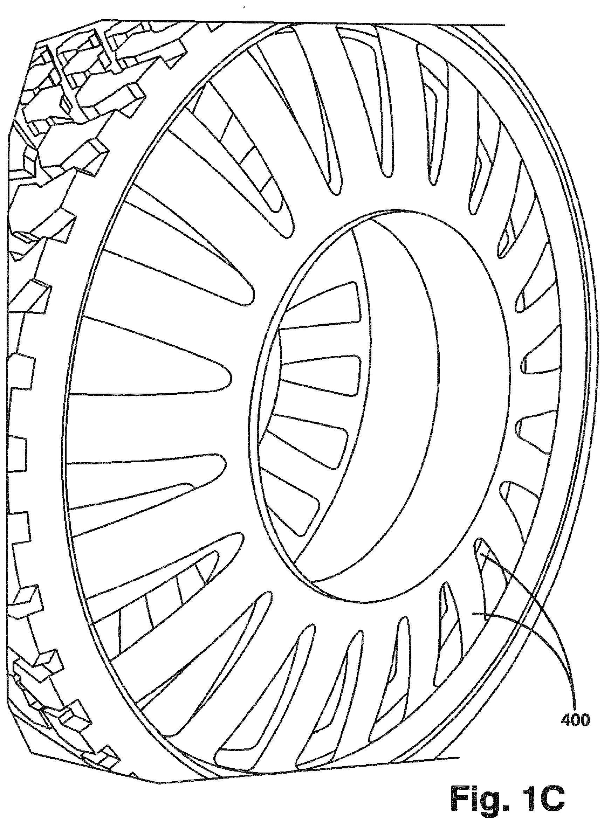

Examples of a non-pneumatic tire 100 of the present invention are shown in Figures 1A-1C. The tire of the present invention includes a radially outer ground engaging tread 200, a shear band 300, and one or more spoke disks 400. The spoke disks 400 may have different designs, as described in more detail, below. The non-pneumatic tire of the present invention is designed to be a top loading structure, so that the shear band 300 and the one or more spoke disks 400 efficiently carry the load. The shear band 300 and the spoke disks 400 are designed so that the stiffness of the shear band is directly related to the spring rate of the tire. The spokes of each disk are designed to be stiff structures that buckle or deform in the tire footprint and do not compress or carry a compressive load. This allows the rest of the spokes not in the footprint area the ability to carry the load. Since there are more spokes outside of the footprint than in, the load per spoke would be small enabling smaller spokes to carry the tire load which gives a very load efficient structure. Not all spokes will be able to elastically buckle and will retain some portion of the load in compression in the footprint. It is desired to minimize this load for the reason above and to allow the shear band to bend to overcome road obstacles. The approximate load distribution is such that approximately 90-100% of the load is carried by the shear band and the upper spokes, so that the lower spokes carry virtually zero of the load, and preferably less than 10%.

The non-pneumatic tire may have different combination of spoke disks in order to tune the non-pneumatic tire with desired characteristics. For example, a first spoke disk 400 may be selected that carries both shear load and tensile load. A second spoke disk may be selected that carries a pure tensile load. A third spoke disk 1000, 2000 may be selected that is stiff in the lateral direction. See exemplary tire disk configurations as shown in Figures 1A-1C.

The tread portion 200 may have no grooves or may have a plurality of longitudinally oriented tread grooves forming essentially longitudinal tread ribs there between. Ribs may be further divided transversely or longitudinally to form a tread pattern adapted to the usage requirements of the particular vehicle application. Tread grooves may have any depth consistent with the intended use of the tire. The tire tread 200 may include elements such as ribs, blocks, lugs, grooves, and sipes as desired to improve the performance of the tire in various conditions.

## SHEAR BAND

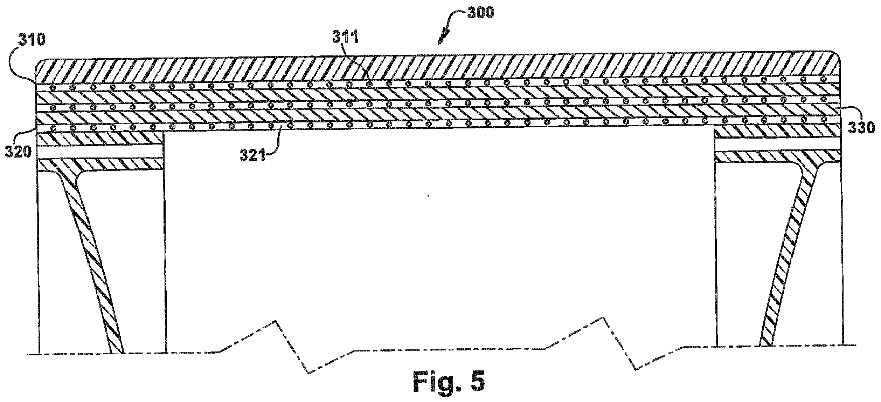

The shear band 300 is preferably annular, and is shown in Figure 5. The shear band 300 is located radially inward of the tire tread 200. The shear band 300 includes a first and second reinforced elastomer layer 310, 320. In a first embodiment of a shear band 300, the shear band comprises two inextensible layers arranged in parallel, and separated by a shear matrix 330 of elastomer. Each inextensible layer 310, 320 may be formed of parallel, preferably inextensible reinforcement cords 311, 321 embedded in an elastomeric coating. The reinforcement cords 311, 321 may be steel, aramid, or other inextensible structure or material. In a second embodiment of the shear band, the shear band 300 further includes a third reinforced elastomer layer located between the first and second reinforced elastomer layers 310,320.

In the first reinforced elastomer layer 310, the reinforcement cords 311 are oriented at an angle Φ in the range of from 0 to +/- 10 degrees relative to the tire equatorial plane. In the second reinforced elastomer layer 320, the reinforcement cords 321 are oriented at an angle φ in the range of from 0 to +/- 10 degrees relative to the tire equatorial plane. Preferably, the angle Φ of the first layer is in the opposite direction of the angle φ of the reinforcement cords in the second layer. That is, an angle + Φ in the first reinforced elastomeric layer and an angle - φ in the second reinforced elastomeric layer.

The shear matrix 330 has a thickness in the range of from 2.54 mm to 5.08 mm, more preferably about 3.7 mm. The shear matrix is preferably formed of an elastomer material having a shear modulus Gm in the range of from 15 to 80 MPa, and more preferably in the range of from 40 to 60 MPA.

The shear band has a shear stiffness GA. The shear stiffness GA is determined by measuring the deflection on a representative test specimen taken from the shear band. The upper surface of the test specimen is subjected to a lateral force F as shown below. The test specimen is a representative sample taken from the shear band and having the same radial thickness as the shearband. The shear stiffness GA is then calculated from the following equation:

$$GA=F*L/\Delta X$$

The shear band has a bending stiffness EI. The bending stiffness EI is determined from beam mechanics using the three point bending test. It represents the case of a beam resting on two roller supports and subjected to a concentrated load applied in the middle of the beam. The bending stiffness EI is determined from the following equation: $EI = PL^3/48* \Delta X$, where P is the load, L is the beam length, and $\Delta X$ is the deflection.

It is desirable to maximize the bending stiffness of the shearband EI and minimize the shear band stiffness GA. The acceptable ratio of GA/EI would be between 0.01 and 20, with an ideal range between 0.01 and 5. EA is the extensible stiffness of the shear band, and it is determined experimentally by applying a tensile force and measuring the change in length. The ratio of the EA to EI of the shearband is acceptable in the range of 0.02 to 100 with an ideal range of 1 to 50.

The shear band 300 preferably can withstand a maximum shear strain in the range of 15-30%.

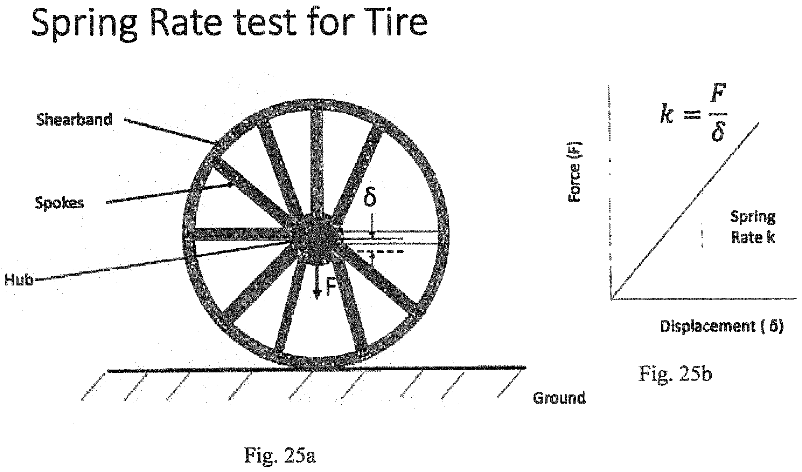

The non-pneumatic tire has an overall spring rate $k_t$ that is determined experimentally. The non-pneumatic tire is mounted upon a rim, and a load is applied to the center of the tire through the rim, as shown in Fig. 25a. The spring rate $k_t$ is determined from the slope of the force versus deflection curve, as shown in Fig 25b. Depending upon the desired application, the tire spring rate $k_t$ may vary. The tire spring rate $k_t$ is preferably in the range of 650 to 1200 lbs/inch for a lawn mower or slow speed vehicle application.

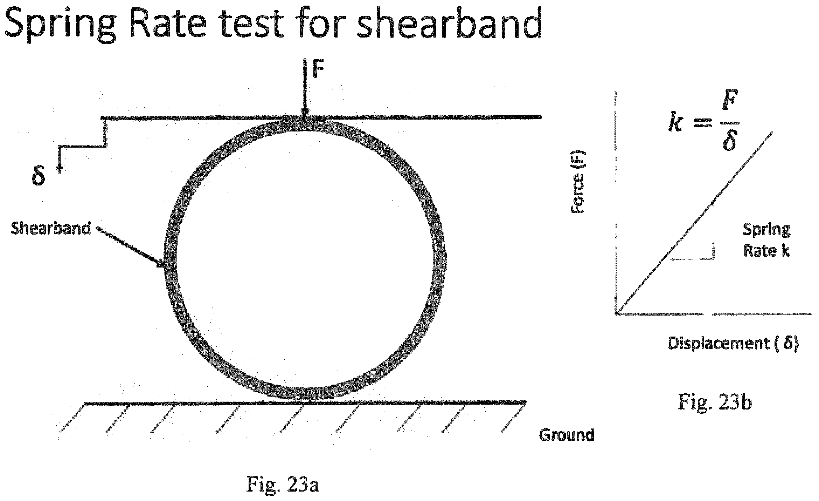

The shear band has a spring rate k that may be determined experimentally by exerting a downward force on a horizontal plate at the top of the shear band and measuring the amount of deflection as shown in Figure 23a. The spring rate is determined from the slope of the Force versus deflection curve as shown in Figure 23b.

The invention is not limited to the shear band structure disclosed herein, and may comprise any structure which has a GA/EI in the range of 0.01 to 20, or a EA/EI ratio in the range of 0.02 to 100, or a spring rate in the range of 20 to 2000, as well as any combinations thereof. More preferably, the shear band has a GA/EI ratio of 0.01 to 5, or an EA/EI ratio of 1 to 50, or a spring rate of 170 lb/in, and any subcombinations thereof. The tire tread is preferably wrapped about the shear band and is preferably integrally molded to the shear band.

## SPOKE DISK

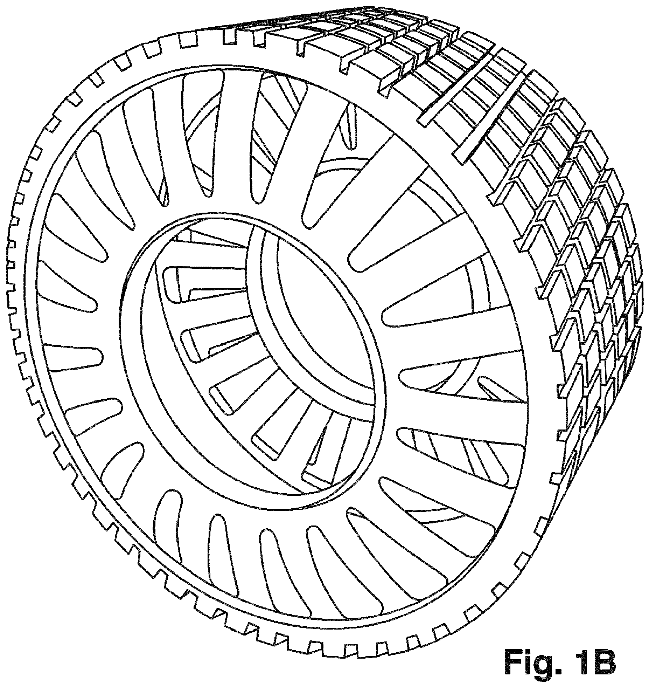

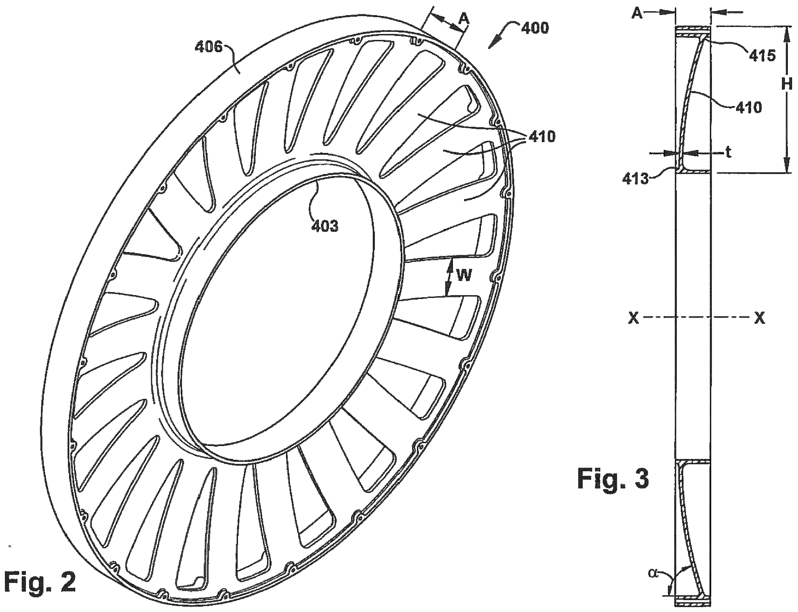

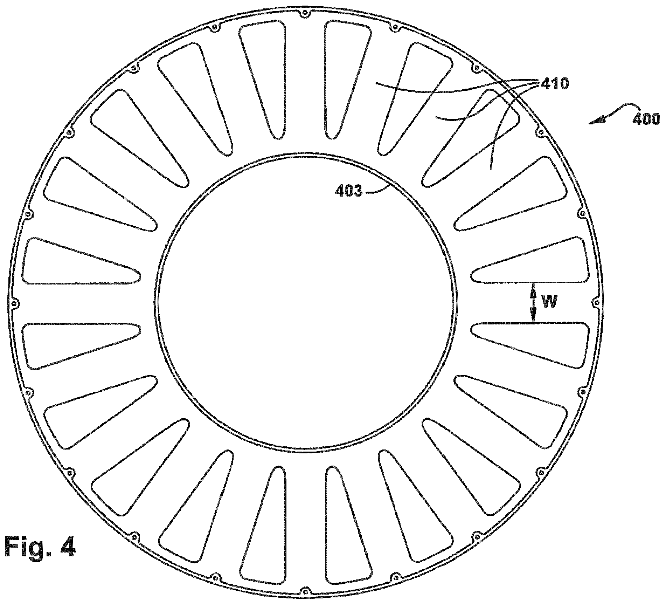

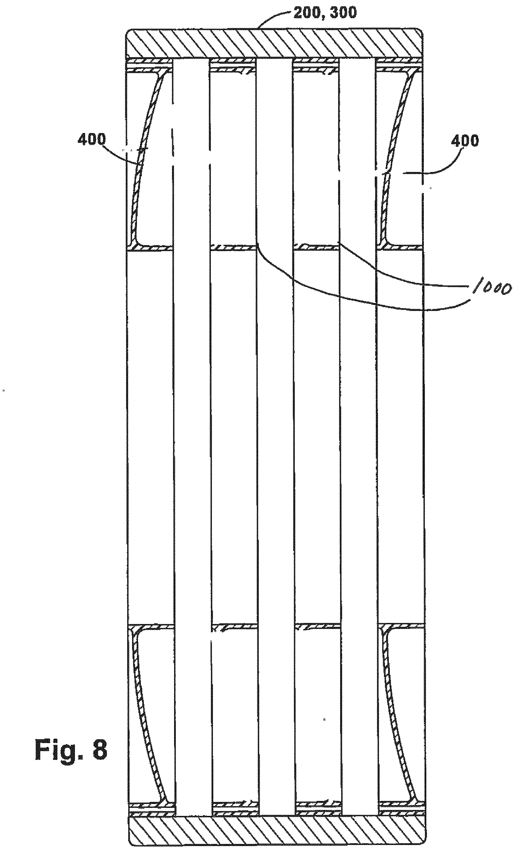

The non-pneumatic tire of the present invention further includes at least one spoke disk 400, 700, 800, 900 or 1000 and preferably at least two such disks which may be spaced apart at opposed ends of the non-pneumatic tire as shown in Figure 1B, 8. The spoke disks may have different cross-sectional designs as shown for example in Figures 4, 6, 7, 12, and 14. The spoke disk functions to carry the load transmitted from the shear layer. The disks are primarily loaded in tension and shear, and carry no load in compression. A first exemplary disk 400 that may be used in the non-pneumatic tire is shown in Figure 2. The disk 400 is annular, and has an outer edge 406 and an inner edge 403 for receiving a metal or rigid reinforcement ring 405 to form a hub. Each disk as described herein has an axial thickness A that is substantially less than the axial thickness AW of the non-pneumatic tire. The axial thickness A is in the range of 5-20% of AW, more preferably 5-10% AW. If more than one disk is utilized, than the axial thickness of each disk may vary or be the same.

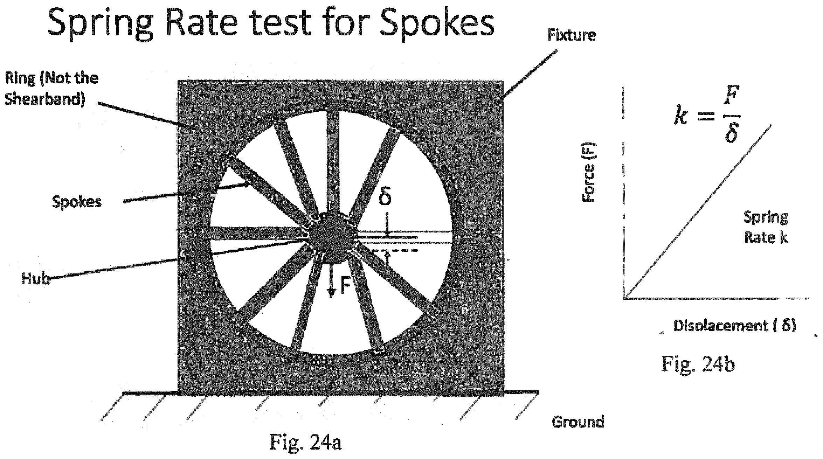

Each spoke disk has a spring rate SR which may be determined experimentally by measuring the deflection under a known load, as shown in Figure 24a. One method for determining the spoke disk spring rate k is to mount the spoke disk to a hub, and attaching the outer ring of the spoke disk to a rigid test fixture. A downward force is applied to the hub, and the displacement of the hub is recorded. The spring rate k is determined from the slope of the force deflection curve as shown in Figure 24b. It is preferred that the spoke disk spring rate be greater than the spring rate of the shear band. It is preferred that the spoke disk spring rate be in the range of 4 to 12 times greater than the spring rate of the shear band, and more preferably in the range of 6 to 10 times greater than the spring rate of the shear band.

Preferably, if more than one spoke disk is used, all of the spoke disks have the same spring rate. The spring rate of the non-pneumatic tire may be adjusted by increasing the number of spoke disks as shown in Figure 8. Alternatively, the spring rate of each spoke disk may be different by varying the geometry of the spoke disk or changing the material. It is additionally preferred that if more than one spoke disk is used, that all of the spoke disks have the same outer diameter.

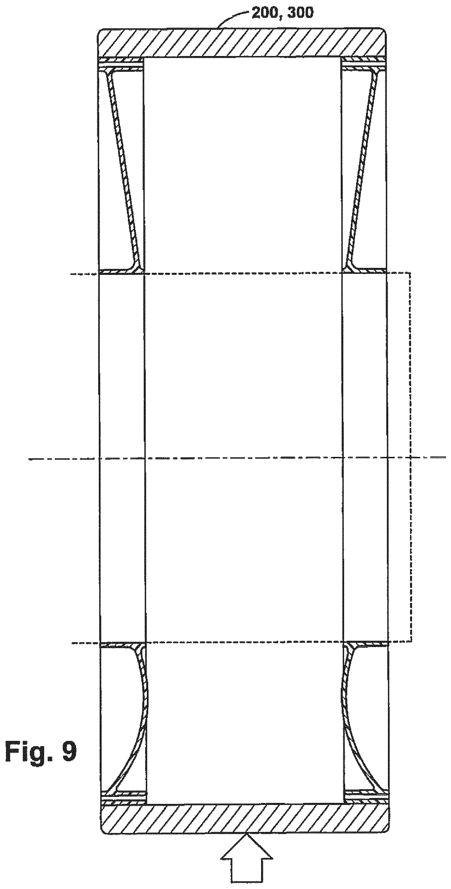

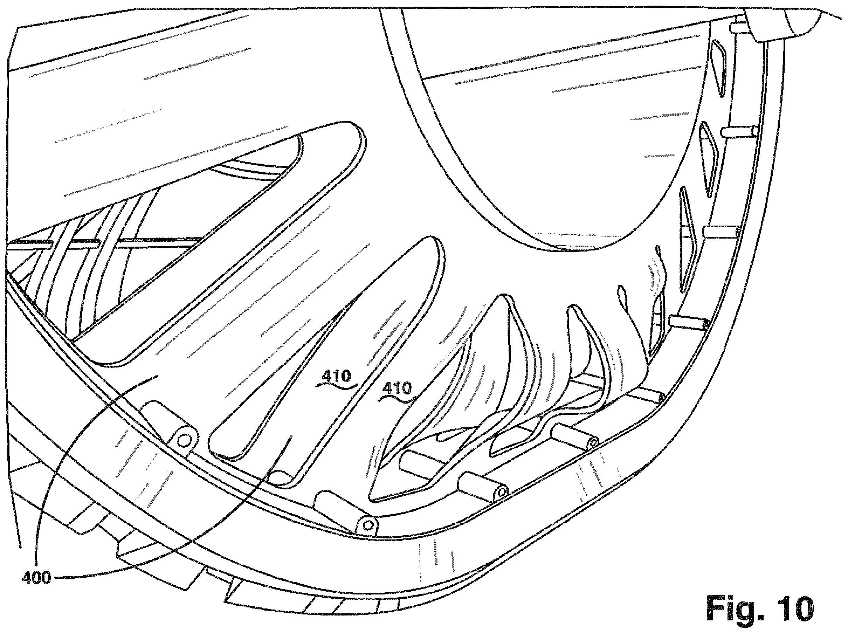

Figure 8 illustrates an alternate embodiment of a non-pneumatic tire having multiple spoke disks 400. The spokes 410 preferably extend in the radial direction. The spokes of disk 400 are designed to bulge or deform in an axial direction, so that each spoke deforms axially outward as shown in Figure 10 or axially inward as shown in Figure 9. If only two spoke disks are used, the spoke disks may be oriented so that each spoke disk bulges or deforms axially inward as shown in Figure 9, or the opposite orientation such that the spoke disks bulge axially outward as shown in Figure 10. When the non-pneumatic tire is loaded, the spokes will deform or axially bow when passing through the contact patch with substantially no compressive resistance, supplying zero or insignificant compressive force to load bearing. The predominant load of the spokes is through tension and shear, and not compression.

The spokes have a rectangular cross section as shown in Figure 2, but are not limited to a rectangular cross-section, and may be round, square, elliptical, etc. Preferably, the spoke 410 has a cross-sectional geometry selected for longitudinal buckling, and preferably has a spoke width W to spoke axial thickness ratio, W/t, in the range of from 15 to 80, and more preferably in the range of from 30 to 60 and most preferably in the range of from 45 to 55. A unique aspect of the preferred rectangular spoke design is the ability of the spokes to carry a shear load, which allows the spring stiffness to be spread between the spokes in tension and in shear loading. This geometric ability to provide shear stiffness is the ratio between the spoke thickness t and the radial height H of the spoke. The preferred ratio of H/t is in the range of from about 2.5 and 25 (about means +/-10%) and more preferably in the range of about 10 to 20 (about means +/-10%), and most preferably in the range of 12-17.

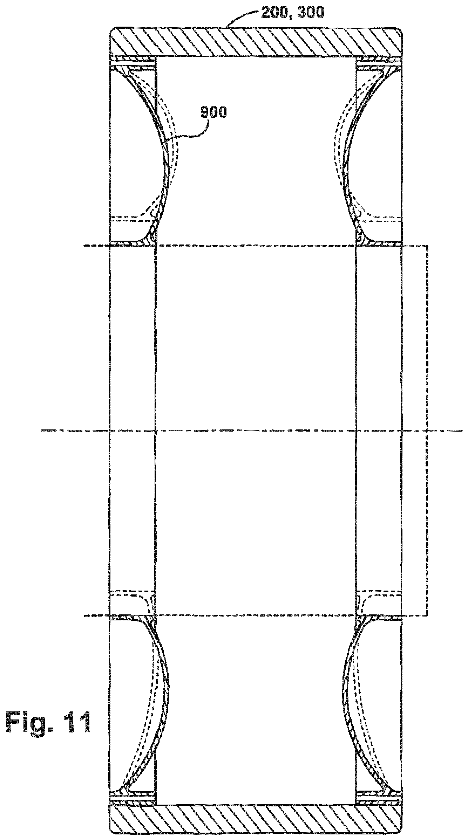

The spokes preferably are angled in the radial plane at an angle alpha as shown in Fig 3. The angle alpha is preferably in the range of from 60 to 88 degrees, and more preferably in the range of from 70 to 85 degrees. Additionally, the radially outer end 415 is axially offset from the radially inner end 413 of spoke 410 to facilitate the spokes bowing or deforming in the axial direction. Alternatively, the spokes 900 may be curved as shown in Fig 11.

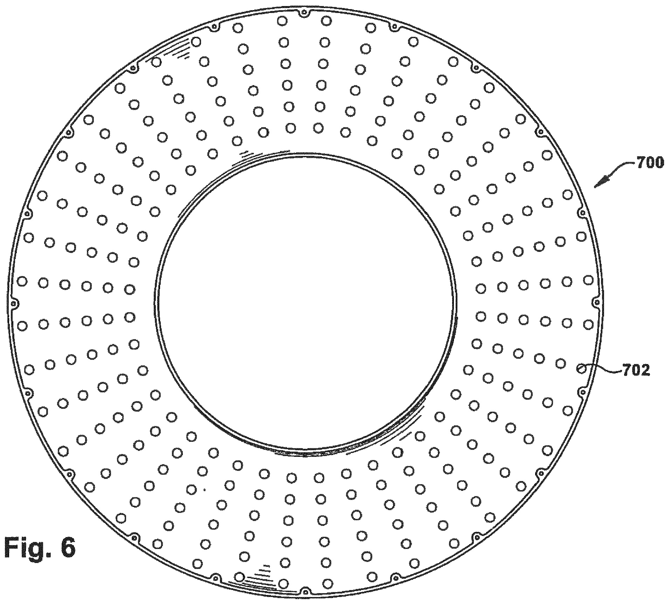

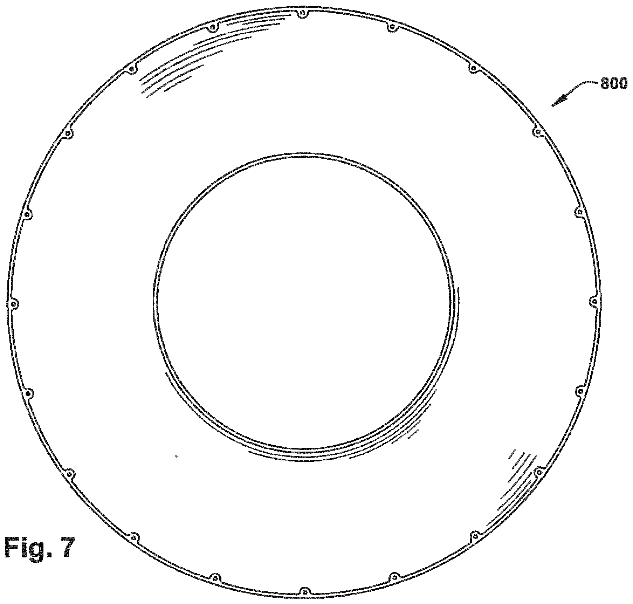

Figure 6 is a second embodiment of a spoke disk 700. The spoke disk is annular, and primarily solid with a plurality of holes 702. The holes may be arranged in rows oriented in a radial direction. Figure 7 is a third embodiment of a spoke disk 800. The spoke disk is annular and solid, with no holes. The cross-section of the spoke disk 700, 800 is the same as Fig. 3. The spoke disks 700, 800 have the same thickness, axial width as shown in Figure 3.

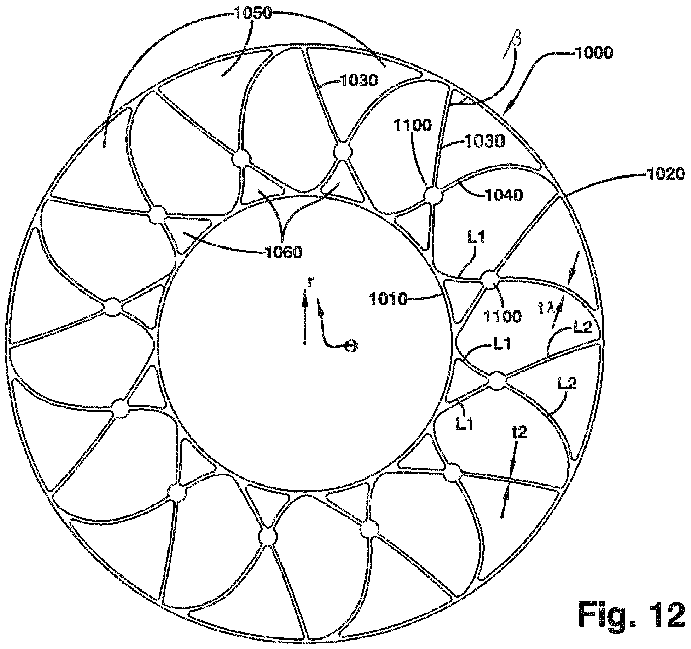

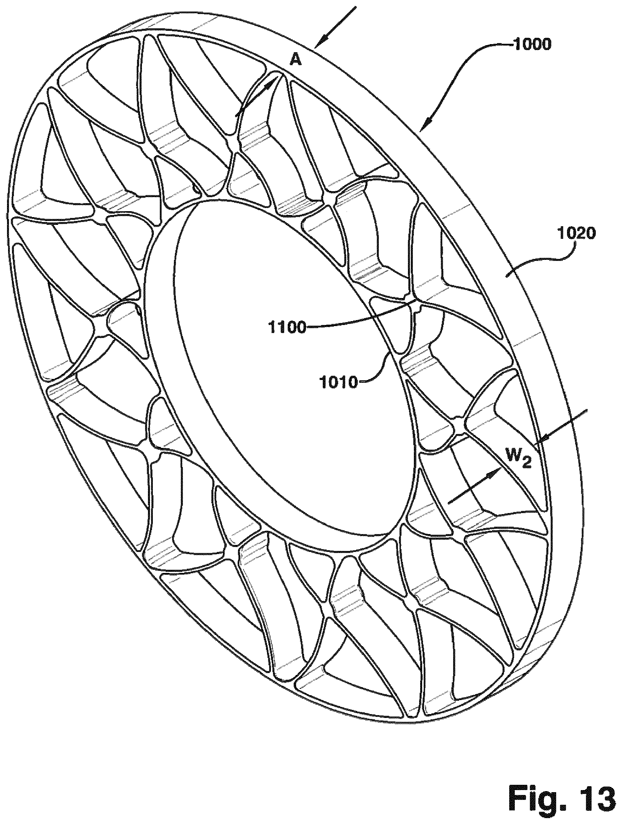

Figures 12-13 illustrates a fourth embodiment of a spoke disk 1000. The spoke disk 1000 has an axial thickness A substantially less than the axial thickness AW of the non-pneumatic tire. The spoke disk 1000 has a plurality of spokes that connect an inner ring 1010 to an outer ring 1020. The shear band 300 is mounted radially outward of the spoke disks. The spoke disk 1000 has a first spoke 1030 that is linear and joins the outer ring 1020 to the inner ring 1010. The first spoke 1030 forms an angle beta with the outer ring 1020 in the range of from 20 to 80 degrees. Beta is preferably less than 90 degrees. The spoke disk 1000 further includes a second spoke 1040 that extends from the outer ring 1020 to the inner ring 1010, preferably in a curved shape. The second spoke 1040 is joined with the first spoke 1030 at a junction 1100. The curved spoke 1040 has a first curvature from the outer ring to the junction 1100, and a second curvature from the junction to the inner ring 1010. In this example, the first curvature is convex, and the second curvature is concave. The shaping or curvature of the first and second spokes control how the blades deform when subject to a load. The blades of the spoke disk 1000 are designed to buckle in the angular direction theta.

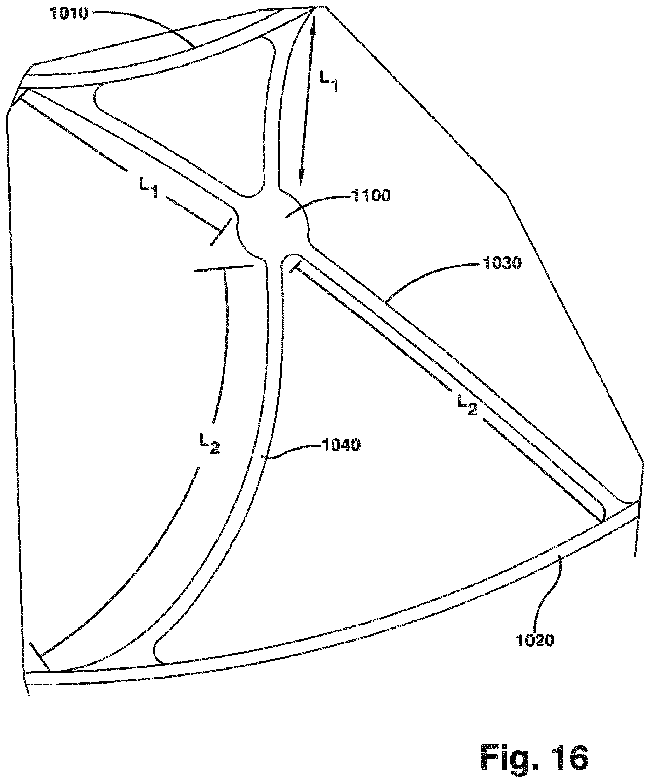

The joining of the first spoke 1030 to the second spoke 1040 by the junction results in an upper and lower generally shaped triangles 1050, 1060. The radial height of the junction 1100 can be varied as shown in Figure 16, by varying the ratio of $L_1/L_2$. The ratio of $L_1/L_2$ may be in the range of from 0.2 to 5, and preferably in the range of 0.3 to 3, and more preferably in the range of 0.4 to 2.5. The spokes 1030, 1040 have a spoke thickness t in the range of from 2-5 mm, and an axial width W in the axial direction in the range of from 25-70 mm. The ratio of the spoke axial width $W_2$ to thickness $t_2$, $W_2/t_2$ is preferably in the range of from 8- 28, more preferably 9-11. The spoke disk 1000 is designed to carry the load primarily in tension, while the other spoke disks 400, 700, 800 are able to carry the load both in tension and in shear. The spoke disk 1000 buckles in the radial plane, while the other spoke disks 400, 700, 800 are designed to buckle in a different plane in the axial direction.

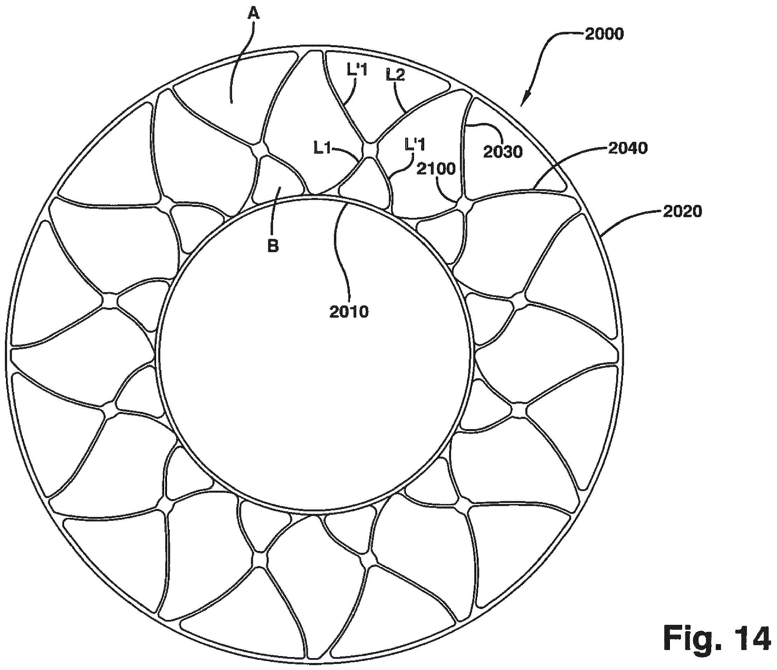

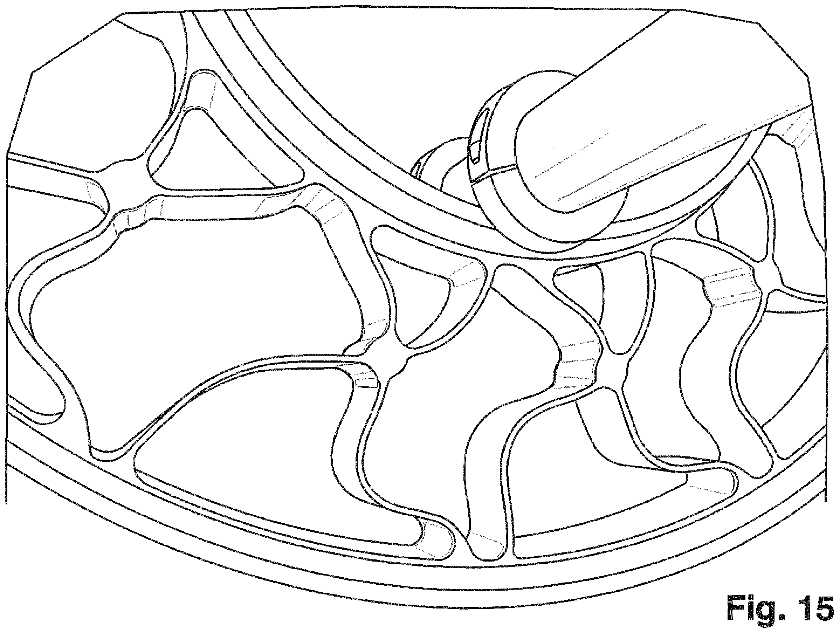

Figure 14 illustrates a fifth embodiment of a spoke disk 2000, which is similar to the spoke disk 1000, except for the following differences. The spoke disk 2000 has a first and second spoke 2030, 2040 which are joined together by a junction 2100, forming two approximate triangular shapes A, B, that have curved boundaries. Both the first and second spokes 2030, 2040 extend from an outer ring 2020 to an inner ring 2010. Both the first and second spokes 2030, 2040 are curved. The curve of the outer radial portion L2 of each spoke has a first curvature, and the inner radial portions L1 have a curve in the opposite direction of the first curvature. Figure 15 illustrates the spoke disk 2000 buckling under load. The radially outer portions of 2040, 2030 buckle in the angular direction.

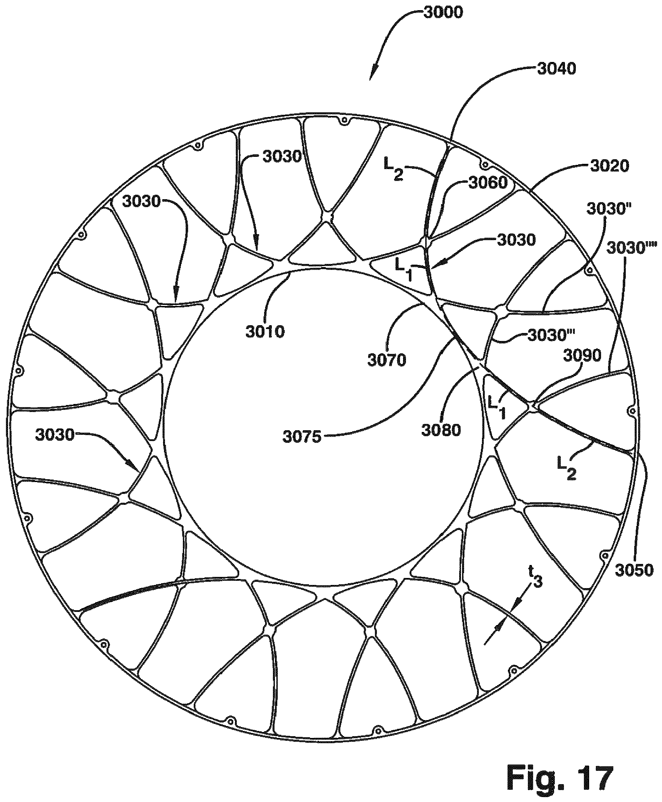

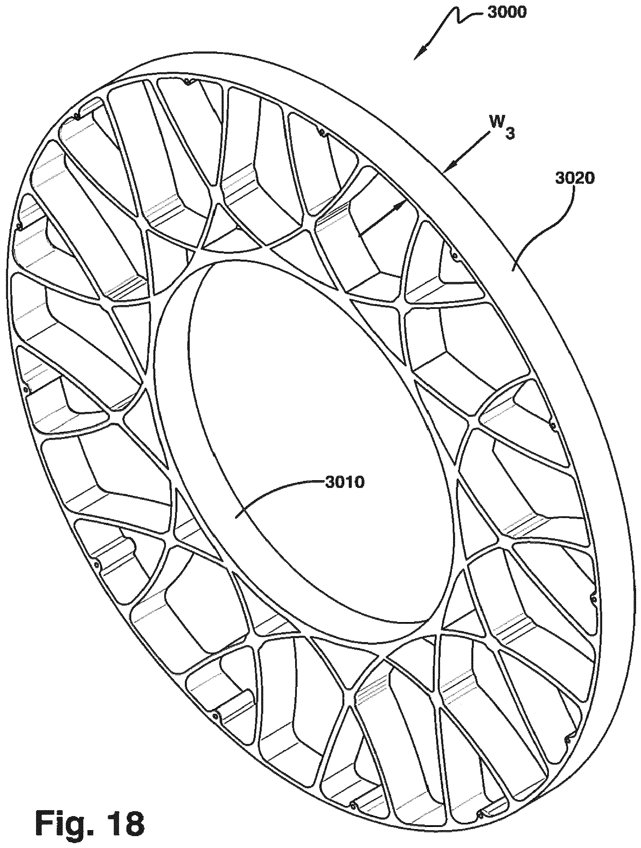

Figure 17 illustrates a sixth embodiment of a spoke disk 3000. The spoke disk 3000 has multiple curved spokes 3030 that overlap with each other. Preferably, the spokes are curved in a parabolic manner. The spoke 3030 has a first end 3040 connected to the outer ring 3020 of the spoke disk. The spoke 3030 intersects with another adjacent spoke 3030' at junction 3060. The radially outer portion of the spoke between the junction 3060 and the end 3040 is designated as $L_2$. The radially inner portion of the spoke 3030 between the junction 3060 and the point of tangency 3075 with the inner ring 3010 is designated as $L_1$. The spoke 3030 intersects with another spoke 3030" at 3070 located on the inner ring 3010. The spoke 3030 intersects with another spoke 3030'" at 3080 located on the inner ring 3010. The spoke 3030 intersects with another spoke 3030"" at 3090. The spoke 3030 has a terminal end 3050 located on the outer ring 3020. Figure 18 illustrates a perspective view of the parabolic spoke disk. The axial thickness $W_3$ of the spoke disk is substantially less than the axial thickness AW of the tire. The axial thickness $W_3$ of the spoke disk may be in the range of about 25 to about 70 mm. The spoke thickness $t_3$ is preferably in the range of from 2 to 5 mm. The axial thickness of the spoke disk may be different than the other axial thicknesses of the other spoke disks. The ratio of L2/L1 is preferably in the range of from 0.2 to 5, and more preferably from 0.3 to 3, and most preferably in a range of from 0.4 to 2.5.

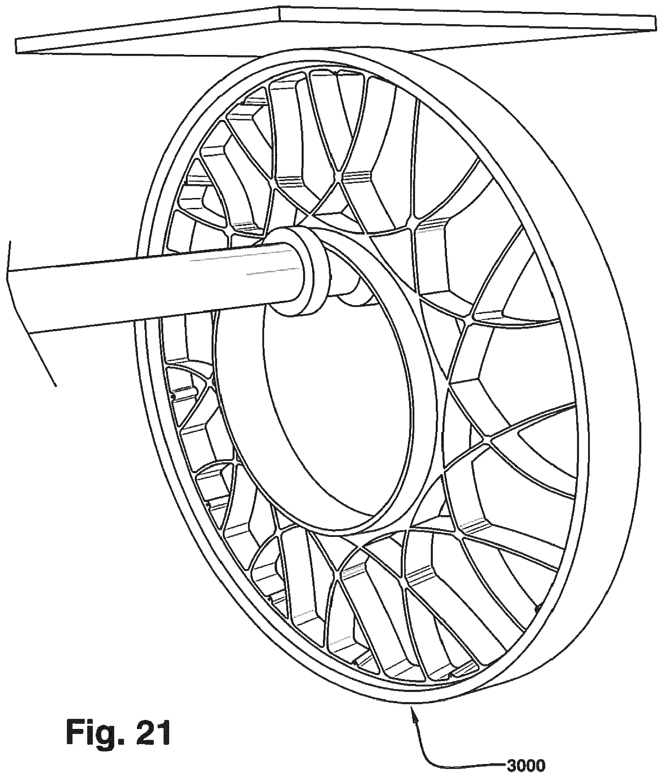

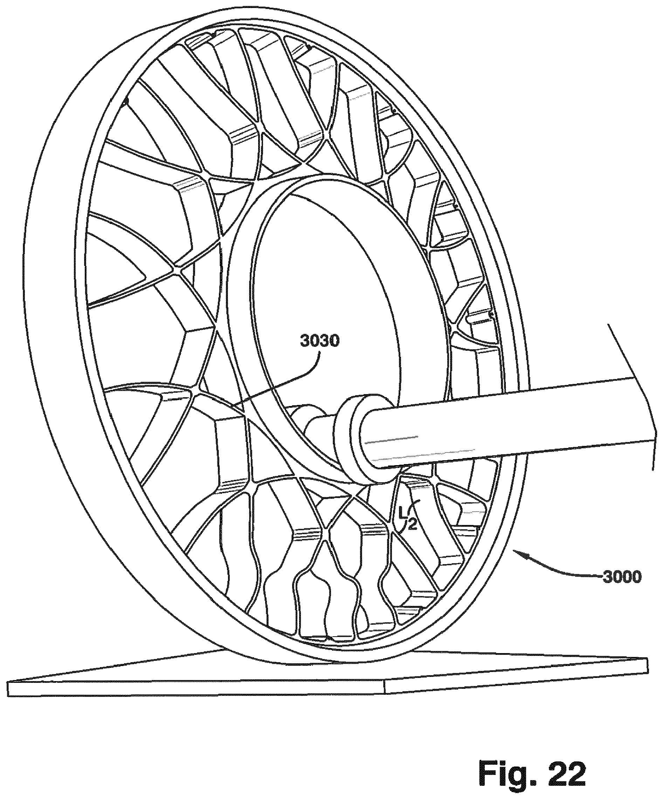

Figure 21 illustrate the spoke disk 3000 prior to loading, and Figure 22 illustrates the spoke disk 3000 in the loaded position. When a load is applied to the rim as shown, the outer radial portions L2 deform as shown in Figure 22.

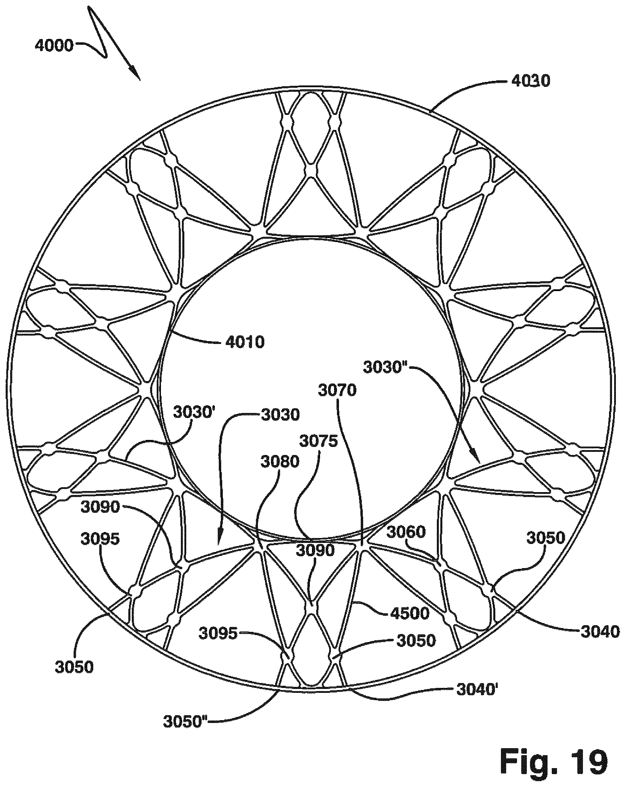

Figure 19 illustrates a seventh embodiment of a double parabolic spoke disk 4000. The spoke disk includes the first parabolic curves 3030, 3030', 3030" as spoke disk 3000, except that a second parabolic curve 4500 is added. The first parabolic curves 3030, 3030' preferably overlap. The second parabolic curve 4500 intersects with the first parabolic curves 3030 at multiple junctions. The second parabolic curve 4500 intersects a single first parabolic curve 3030 at junctions 3070, 3080. The second parabolic curve 4500 intersects a second first parabolic curve 3030' at junctions 3080, 3090, 3050. The second parabolic curve 4500 intersects with a third parabolic curve 3030" at junctions 3070, 3090, 3095. Each first parabolic curve 3030 intersects with three other first parabolic curves 3030', 3030", 3030"'. The second parabolic curve 4500 has an apex 4600 located on the radially outer ring 4030, and radially inner legs 4510, 4520 terminating at vertices 3080, 3070 respectively. The apex 3075 of the first parabolic curve 3030 intersects with the radially inner ring 4010.

A preferred embodiment of a non-pneumatic tire is shown in Figure 1B. The spoke disks on the outer axial ends are the spoke disks 400, and are oriented so that they buckle axially outward. Located between the opposed spoke disks 400 are at least one disk 1000, 2000, 4000. The outer spoke disks are designed to carry both shear and tension loads, while the disks 1000, 2000 carry loads in tension only. The number of inner disks may be selected as needed. The outer disks buckle in a first plane, while the inner disks buckle in a different plane. The disks 1000, 2000 are designed to be laterally stiff, so that they can be combined to tune the tire lateral stiffness. The outer disks 400 are not as stiff in the lateral direction as the disks 1000, 2000.

The spoke disks are preferably formed of an elastic material, more preferably, a thermoplastic elastomer. The material of the spoke disks is selected based upon one or more of the following material properties. The tensile (Young's) modulus of the disk material is preferably in the range of from 45 MPa to 650 MPa, and more preferably in the range of from 85 MPa to 300 MPa, using the ISO 527-1/-2 standard test method. The glass transition temperature is preferably less than -25 degree Celsius, and more preferably less than -35 degree Celsius (measured using DSC). The yield strain at break is preferably more than 30%, and more preferably more than 40%. The elongation at break is preferably more than or equal to the yield strain, and more preferably, more than 200%. The heat deflection temperature is preferably more than 40 degree C under 0.45 MPa, and more preferably more than 50 degree C under 0.45 MPa. Preferably, there is no break result for the Izod and Charpy notched test at 23 degree C using the ISO 179/ISO180 test method. Two suitable materials for the disk are commercially available by DSM Products and sold under the trade name ARNITEL PL 420H and ARNITEL PL461.

## Claims

1. A non-pneumatic tire comprising a ground contacting annular tread portion (200), a shear band (300) and at least one spoke disk (3000) connected to the shear band (300), wherein the spoke disk (3000) has one or more first spokes (3030) having a first parabolic curvature, wherein the one or more first spokes (3030) extends from an outer ring (3020) to an inner ring (3010) of the spoke disk (3000).

2. The non-pneumatic tire of claim 1 having one or more second spokes (3030') having a second parabolic curvature different from the first parabolic curvature.

3. The non-pneumatic tire of claim 1 or 2 wherein there are a plurality of first spokes (3030) that overlap with each other.

4. The non-pneumatic tire of at least one of the previous claims wherein an apex (4600) of the first spokes (3030) is located on the inner ring (3010).

5. The non-pneumatic tire of at least one of the previous claims wherein the one or more first spokes (3030) extend from the outer ring (3020) to the inner ring (3010), and then back from the inner ring (3010) to the outer ring (3020).

**6.** The non-pneumatic tire of at least one of the previous claims wherein a first spoke (3030) intersects with an adjacent first spoke at a junction, wherein each first spoke (3030) has a second L2 portion having a length L2 radially outwards of the junction, and a first portion having a length L1 located radially inward of the junction, wherein the ratio of the lengths L2/L1 ranges from 0.2 to 5 or from 0.8 to 2.5.

**7.** The non-pneumatic tire of at least one of the previous claims wherein said first spoke (3030) has a thickness (t3) in the range of from 2 to 5 mm.

**8.** The non-pneumatic tire of at least one of the previous claims wherein the first spoke (3030) has an axial width (w3) in the range of from 25 to 70 mm.

**9.** The non-pneumatic tire of at least one of the previous claims wherein the first spoke (3030) has a ratio of spoke axial width (w3) to spoke thickness (t3) in the range of from 8 to 28 or 12 to 24.

**10.** The non-pneumatic tire of at least one of the previous claims wherein the spoke disk (3000) further includes a second spoke having a second curvature different than the first curvature.

**11.** The non-pneumatic tire of claim 10 wherein the second curvature is a parabolic curve having an apex intersecting the outer ring (3020).

**12.** The non-pneumatic tire of claim 10 or 11 wherein the second spoke intersects with two of the first spokes (3030).

**Fig. 1A**

Fig. 1B

**Fig. 1C**

400

EP 3 184 328 A1

Fig. 3

Fig. 2

12

Fig. 4

Fig. 5

**Fig. 6**

700

702

Fig. 7

**Fig. 8**

200, 300

**Fig. 9**

Fig. 10

EP 3 184 328 A1

200, 300

900

Fig. 11

Fig. 12

Fig. 13

Fig. 14

**Fig. 15**

Fig. 16

Fig. 17

**Fig. 18**

4000

4030

4010

3030"

3070

3030'

3030

3075

3080

3060

3050

3090

3095

3090

4500

3050

3040

3050

3095

3050

3040'

3050"

Fig. 19

**Fig. 20**

**Fig. 21**

3000

Fig. 22

# Spring Rate test for shearband

Fig. 23a

Fig. 23b

EP 3 184 328 A1

# Spring Rate test for Spokes

**Ring (Not the Shearband)**

**Fixture**

**Spokes**

**Hub**

$\delta$

$\downarrow F$

**Ground**

Fig. 24a

$$k = \frac{F}{\delta}$$

Force (F)

Spring Rate k

Displacement ($\delta$)

Fig. 24b

# Spring Rate test for Tire

Fig. 25a

$$k = \frac{F}{\delta}$$

Force (F)

Spring Rate k

Displacement ( δ)

Fig. 25b

EP 3 184 328 A1

Europäisches
Patentamt

European
Patent Office

Office européen
des brevets

# EUROPEAN SEARCH REPORT

Application Number

EP 16 20 3407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2012 0063616 A (HANKOOK TIRE CO LTD [KR]) 18 June 2012 (2012-06-18) * paragraph [0003]; figures 2-3 * | 1-3,6-12 | INV. B60C7/12 B60C7/18 |
| A | KR 2004 0027984 A (SOCIETE DE TECHNOLOGIE MICHELIN MICHELIN RECHERCHE ET TECHNIQUE S.A.) 1 April 2004 (2004-04-01) * abstract; figure 1 * | 1 | |
| X | EP 2 873 537 A1 (HANKOOK TIRE CO LTD [KR]) 20 May 2015 (2015-05-20) * the whole document * | 1-5,7-10 | |
| A | | 6,11,12 | |
| X | CN 104 669 944 A (SHANDONG LINGLONG TYRE CO LTD) 3 June 2015 (2015-06-03) * figures * | 1-3,7-10 | |
| A | | 4-6,11, 12 | |
| X | KR 2014 0001048 A (HANKOOK TIRE CO LTD [KR]) 6 January 2014 (2014-01-06) * figures * | 1-3,7-10 | |
| A | | 4-6,11, 12 | TECHNICAL FIELDS SEARCHED (IPC) |
| X | JP S59 216703 A (HARADA TATSUO) 6 December 1984 (1984-12-06) * abstract; figures 2,3 * | 1,4,5, 7-9 | B60C B60B |
| A | | 2,3,6, 10-12 | |
| X,P | WO 2016/100017 A1 (BRIDGESTONE AMERICAS TIRE [US]) 23 June 2016 (2016-06-23) * the whole document * | 1-3,5,6, 10,11 | |
| E | EP 3 144 159 A1 (GOODYEAR TIRE & RUBBER [US]) 22 March 2017 (2017-03-22) * the whole document * | 1,9 | |

The present search report has been drawn up for all claims

| Place of search | Date of completion of the search | Examiner |
|---|---|---|
| Munich | 28 April 2017 | Jung, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 3407

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2017

| Patent document cited in search report | | Publication date | Patent family member(s) | | Publication date |
|---|---|---|---|---|---|
| KR 20120063616 | A | 18-06-2012 | CN | 102555674 A | 11-07-2012 |
| | | | KR | 20120063616 A | 18-06-2012 |
| KR 20040027984 | A | 01-04-2004 | AT | 378193 T | 15-11-2007 |
| | | | CA | 2458002 A1 | 06-03-2003 |
| | | | CN | 1545454 A | 10-11-2004 |
| | | | DE | 60131469 T2 | 18-09-2008 |
| | | | EP | 1420964 A1 | 26-05-2004 |
| | | | JP | 4855646 B2 | 18-01-2012 |
| | | | JP | 2005500932 A | 13-01-2005 |
| | | | KR | 20040027984 A | 01-04-2004 |
| | | | MX | PA04001568 A | 17-05-2004 |
| | | | US | 2004159385 A1 | 19-08-2004 |
| | | | WO | 03018332 A1 | 06-03-2003 |
| EP 2873537 | A1 | 20-05-2015 | CN | 104626876 A | 20-05-2015 |
| | | | EP | 2873537 A1 | 20-05-2015 |
| | | | JP | 6001032 B2 | 05-10-2016 |
| | | | JP | 2015089809 A | 11-05-2015 |
| | | | KR | 101411103 B1 | 27-06-2014 |
| | | | US | 2015122382 A1 | 07-05-2015 |
| CN 104669944 | A | 03-06-2015 | NONE | | |
| KR 20140001048 | A | 06-01-2014 | CN | 103507571 A | 15-01-2014 |
| | | | EP | 2679406 A1 | 01-01-2014 |
| | | | JP | 5588046 B2 | 10-09-2014 |
| | | | JP | 2014008958 A | 20-01-2014 |
| | | | KR | 20140001048 A | 06-01-2014 |
| | | | US | 2014000777 A1 | 02-01-2014 |
| JP S59216703 | A | 06-12-1984 | NONE | | |
| WO 2016100017 | A1 | 23-06-2016 | NONE | | |
| EP 3144159 | A1 | 22-03-2017 | CN | 106541775 A | 29-03-2017 |
| | | | EP | 3144159 A1 | 22-03-2017 |
| | | | JP | 2017056936 A | 23-03-2017 |
| | | | KR | 20170033779 A | 27-03-2017 |
| | | | US | 2017080756 A1 | 23-03-2017 |

For more details about this annex : see Official Journal of the European Patent Office, No. 12/82